# EUROPEAN PATENT SPECIFICATION

(11) **EP 2 530 898 B1**
(45) Date of publication and mention of the grant of the patent: **12.02.2014**
(21) Application number: 11290254.9
(22) Date of filing: 03.06.2011
(51) Int. Cl.: H04L 29/06, H04W 80/06, H04W 88/06

(54) **Method and apparatus for mitigating buffering delay at a network edge**
Verfahren und Vorrichtung zur Verringerung der Pufferverzögerung am Netzwerkrand
Procédé et dispositif pour réduire le retard de tampon à la périphérie du réseau

(43) Date of publication of application: 05.12.2012
(73) Proprietor: Alcatel Lucent, 75007 Paris (FR)
(72) Inventor: Pianese, Fabio, 1000 Brussel (BE); Bosch, Peter, 1432 Aalsmeer (NL)
(74) Representative: ALU Antw Patent Attorneys

(56) References cited:
- WO-A1-02/33909

## Description

### Field of the Invention

The present invention pertains to the field of communication at the transport layer, more in particular to the use of Transmission Control Protocol (TCP) signaling at the network edge.

### Background

Wireless and cellular communication channels are often limited in capacity and subject to propagation effects such as shadowing and interference results, which result in further limitation of useful bandwidth due to need to retransmit bursts of damaged packets. In an end-to-end TCP-based communication, these channels often constitute a bottleneck link. Moreover, a layer-2 retransmission mechanism is used to hide over-the-air losses, thereby making the round-trip delay for such TCP session quite variable. During these loss events, the datagram transmission buffers of the BTS are filled with new traffic, while the lost data is retransmitted.

WO 02/33909 A1 discloses a method of controlling congestion in a wireless telecommunication system for packet transfers between a mobile terminal and a TCP sender, which comprises detecting the state of a downlink buffer in a radio network controller (RNC), in order to apply flow control by modifying the "advertised window" field in corresponding TCP-ACK packets travelling over the uplink. This method does not deal with outstanding data at other nodes than the RNC.

### Summary

It is an object of the present invention to provide a method for mitigating the buffering delay, in particular in wireless networks, more in particular at the cellular edge.

According to a first aspect of the invention, there is provided a method for mitigating buffering delay in a TCP-encapsulated data stream transmitted over a network, in accordance with claim 1.

It is an advantage of the method of the present invention that it provides a non-invasive form of flow control without resorting to the raster drastic measure of dropping packets, which could have undesired consequences. It is a further advantage of the method of the present invention that it can be implemented at various existing or newly provided network nodes in the path of the TCP communication in a wholly transparent way, i.e. without knowledge or active cooperation of the end points.

Embodiments of the method of the present invention are based *inter alia* on the insight that the acknowledgments of previously transmitted TCP data segments, as appearing in the return flow of a TCP conversation, can be used to estimate an amount of outstanding data. This amount of outstanding data is indicative of the buffer occupancy conditions in the portion of the network between the sender and the receiver.

In an embodiment of the method of the present invention, said determining of a state of buffer occupancy comprises comparing said amount of outstanding data to a predetermined threshold amount.

In an embodiment of the method of the present invention, one of said first interface and said second interface comprises a cellular interface. In a particular embodiment, one of said first interface and said second interface comprises a 3G wireless interface. In a particular embodiment, one of said first interface and said second interface comprises a femtocell interface.

In an embodiment of the method of the present invention, one of said first interface and said second interface comprises a WLAN interface.

It is an advantage of these embodiments that they resolve the excessive buffering problem of the traditional weakest link of a wireless or mobile network: the radio-based edge. Additionally, embodiments of the method of the present invention can be advantageously used to control TCP traffic when preparing a hand-over between wireless networks with different bandwidth and/or buffering characteristics, to avoid anomalous out-of-order delivery of buffered packets when the TCP conversation is being moved from one edge network to another.

According to an aspect of the present invention, there is provided a computer program configured to cause a processor to perform the method as described above.

According to an aspect of the present invention, there is provided an apparatus for mitigating buffering delay in a TCP-encapsulated data stream transmitted over a network, according to claim 8.

In an embodiment of the apparatus of the present invention, one of said first interface and said second interface comprises a cellular interface.

In a particular embodiment, one of said first interface and said second interface comprises a 3G wireless interface.

In a particular embodiment, one of said first interface and said second interface comprises a femtocell interface.

In an embodiment of the apparatus of the present invention, one of said first interface and said second interface comprises a WLAN interface.

According to an aspect of the invention, there is provided a mobile node comprising the apparatus as described above.

According to an aspect of the invention, there is provided a wireless BTS comprising the apparatus as described above.

The advantages of the apparatus and computer programs according to the present invention are analogous to those described above in connection with the method according to the present invention.

### Brief Description of the Figures

Some embodiments of apparatus and/or methods in accordance with embodiments of the present invention are now described, by way of example only, and with reference to the accompanying drawings, in which:
Figure 1 provides a flow chart of a method according to an embodiment of the present invention;
Figure 2 is a schematic representation of a network in which the method and/or apparatus according to the present invention may be deployed;
Figure 3 is another schematic representation of a network in which the method and/or apparatus according to the present invention may be deployed, using NMIP proxies;
Figure 4 represents a first use scenario of a method according to the present invention; and
Figure 5 represents a second use scenario of a method according to the present invention.

Throughout the figures, like reference signs have been used to designate the same or similar elements.

### Detailed Description of Embodiments

It is an inherent property of TCP-based communication that large amounts of data can be in transit persistently between sender and receiver when the channel has a high bandwidth x delay product. Accordingly, when a bottleneck link allows for a large amount of buffering without packet loss, the TCP infrastructure creates a large queue of transmitted undelivered datagrams inside the network. More specifically, the data will accumulate just ahead of the bottleneck link, if the sender sends at a higher rate than the bottleneck link can sustain.

When this excessive buffering is combined with an aggressive retransmission policy, the network load will become unstable and undergo crippling network congestion: datagram transfer delays grow unboundedly due to queuing delay, datagram losses, and retransmission of lost datagrams.

Other drawbacks of excessive buffering include a prolonged reaction time to recover from datagram loss, the need to forward large amounts of data between BTS when dealing with mobility events, and increased memory requirements for the network equipment participating in the end-to-end TCP communication.

Buffer design is a delicate trade-off. On the one hand, providing sufficiently large buffers avoids draining outbound interfaces of intervening routers, while on the other hand queuing delay, which is a significant component of datagram transmission delay, grows proportionally with the aggregate buffer size.

However, even an end-to-end TCP link with carefully dimensioned buffers may operate in a sub-optimal way when deployed over a layer-2 infrastructure with automatic retransmissions that are not notified to the transport layer. If the layer-2 infrastructure of, for instance, a wireless or cellular network masks packet losses via buffering and retransmission, the TCP sender is unaware of the reduced capacity of the receiver's channel: specifically, since no packets are lost, the sender's TCP stack is unable to detect the overloading of the network and will keep increasing its sender window, further adding to the buffered data at the BTS.

The present invention is based *inter alia* on the insight that it is particularly advantageous in wireless and cellular edge networks to use the TCP receiver window to provide flow-control information about the last leg, i.e. the bottleneck link, to rate limit the end-to-end connection. In particular, the TCP receiver window may be used to signal the bandwidth in the last leg. In this way, undesired buffer growth, which would lead to increased end-to-end latency, can be avoided.

TCP, as it is presently known, uses distinct mechanisms to perform congestion control and flow control, the former being intended for dealing with end-to-end bandwidth limitations, while the latter is used to signal data processing limitations at the receiver:
- Congestion control is used to ensure that network links are fairly shared between competing flows. The presence of network congestion is inferred from packet loss in a datagram flow, which occurs when intervening routers are forced to drop datagrams due to saturated buffers. Following the detection of packet loss, TCP reduces its congestion window, i.e. the maximum allowed amount of outstanding data, which tends to have the effect of cutting the sending rate to a half for each loss event.
- Flow control is achieved by letting the TCP receiver inform the sender how much free space is available at its buffers via the "TCP window" parameter, whereupon the sender will stop transmitting whenever the amount of free buffer space at the destination reaches zero.

Presently, in large delay x bandwidth product networks, the general concern is making the value of the receive window large enough so that the network can be used more efficiently by single TCP connections. Hence, it is presently quite uncommon to see TCP connections actually being rate-limited by TCP flow control as mediated by the TCP window parameter.

The present invention proposes to use the TCP flow control mechanism as a means to enforce rate limiting for heavily buffered links, such as those found in wireless systems. The invention is based *inter alia* on the insight that it is advantageous to transparently modify the TCP window parameter in TCP acknowledgement datagrams to rate control the sender.

In an embodiment, the TCP window ("WIN") parameter of the TCP acknowledgement datagram that travels towards the data sender is adjusted with the minimum of the amount of buffer space available inside the BTS for the TCP session, and the amount of buffering space available in the recipient. This technique may be used in the recipient equipment and/or in the BTS. If this technique is used in cellular/wireless BTS when downloading data across the wireless channel and the wireless channel is the bottleneck link, the estimated channel quality towards the mobile node can be used further flow-control the sender.

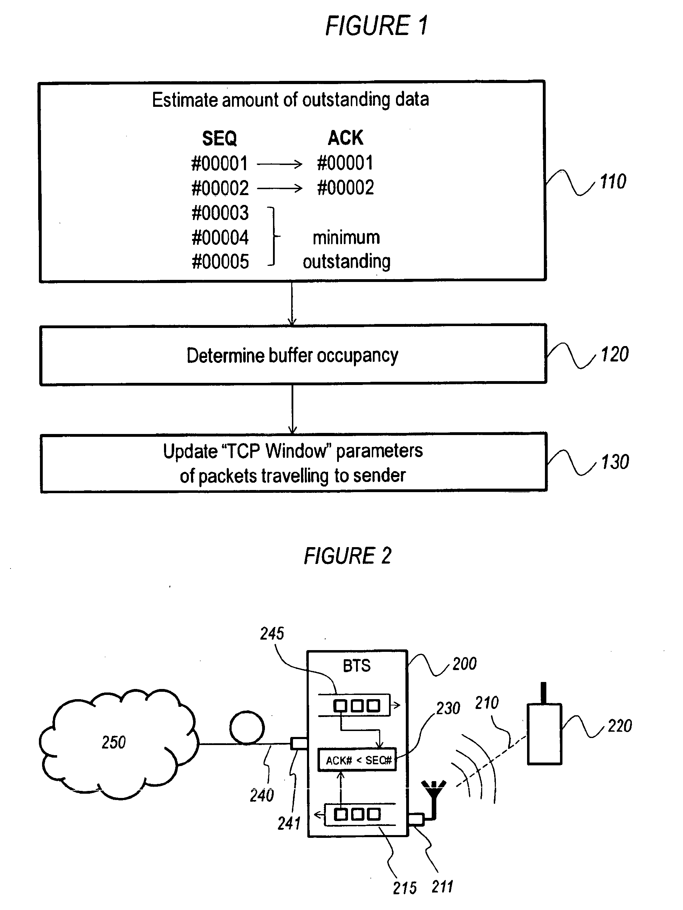

With reference to Figure 1, an embodiment of the method of the invention will now be described, in which an exemplary network element is located between a fast connection and a slow connection.

Such a situation might occur in a node **200** as illustrated in Figure 2, which concentrates access or edge links **210** onto a core network **250,** such as a cellular base station, RNC, a DSLAM, or even a router aggregating slow-speed serial links. The skilled person will appreciate that the method equally applies to other types of network elements, when operating under similar circumstances. Hereinafter, data travelling from the network node **200** towards the slow link **210** will be designated "downstream" traffic. Conversely, data travelling from the slow link **210** to the node **200** will be designated "upstream" traffic. The originator of the TCP traffic under consideration is considered to be part of the network **250** that is connected to the node **200** via the fast link **240**. The TCP receiver **220** is schematically depicted in a purely exemplary way as a mobile node.

Although the method is illustrated in Figure 1 and described below as a sequence of steps performed in a certain order, the skilled person will appreciate that this is done for illustrative purpose only, and that any of the steps may be carried out in a different order, unless it is clear from the description that a particular step can only take place after another one has been completed, or vice versa.

In a first step **110**, an estimate of the amount of outstanding data is generated, preferably by comparing the TCP sequence ("SEQ") numbers of the downstream traffic, schematically illustrated as packets in a downstream buffer **245**, with the TCP acknowledgement ("ACK") numbers advertised in the upstream traffic, schematically illustrated as packets in an upstream buffer **215**. This value places a lower bound on the amount of data in flight between TCP sender and receiver **220**. The actual amount of data in flight also comprises data being buffered further upstream in the network **250**, beyond the view of the network element **200**. In the context of this first step **110**, the node **200** under consideration must be capable of performing per-connection accounting of the amount of un-acknowledged data, and the total amount of data in the buffer **245**.

In a second step **120**, an assessment is made as to whether a buffer is overloaded. This assessment is preferably performed by comparing the estimated amount of outstanding data obtained in the first step **100** with a maximum amount of data the access or edge link can reasonably buffer without significant performance degradation.

A comparison of the edge link's measured round-trip time (RTT) latency with a maximum acceptable RTT threshold value may be leveraged as an additional trigger for buffer occupancy detection in the second step **120**. This diagnostic is particularly revealing when the capacity of the radio channel is severely degraded by persistent propagation problems, in which case the layer-2 retransmission mechanisms will inflate the RTT without causing packet loss at the higher layers.

In a third step **130**, the network element under consideration rewrites the TCP window ("WIN") parameter of the TCP acknowledgement header present in all the upstream TCP packets, before relaying them in the direction of the sender, in order to implement the degree rate limitation that reduces the downstream TCP flow to a rate that can be persistently supported by the edge link.

The new WIN value is preferably chosen so that the amount of outstanding data for each TCP connection does not outgrow a predetermined threshold. A particularly preferred predetermined threshold is the value defined as the buffer size at maximum RTT latency divided by the number of competing TCP connections.

Even better granularity could be achieved by using more fine-grained accounting of the actual throughput of each TCP connection.

In the context of this third step **130**, the node under consideration must be capable of performing a recalculation of the checksum for the TCP packets in which the WIN field has been modified.

If the method of the present invention is implemented at the wireless or cellular BTS, certain cross-layer synergies may advantageously be exploited. The detailed information that is available in such nodes on the state of the wireless channel may be used to fine tune the rate of the sender to the very rate sustained by the physical network at any given time. In addition, layer-2 scheduling choices may be taken into account in executing the method according to the invention. Furthermore, application-layer information may indicate whether particular ongoing TCP conversation are latency-sensitive or not, and this information may be taken into account in the performance of the method according to the present invention.

The method of the present invention can be implemented without radically increasing the requirements on the network node in terms of processing power. Devices such as BTS, which are connected at the edge of the network, usually serve limited numbers of simultaneous connections - typically less than approximately one thousand - the processing of which is not prohibitive for the deployment of the method of the present invention.

It is an advantage of the method of the present invention that it provides flow control without simultaneously bringing on the unpredictable effects that tend to result from dropping datagrams.

With reference to Figure 2, it may be seen that the apparatus **200** depicted therein comprises a first interface **241** for interfacing with the first network link **240**, and a second interface **211** for interfacing with the second network link **210**. The skilled person will appreciate that these interfaces **241**, **211** are only depicted schematically, and that they in fact imply all the necessary hardware and logic that enable a network node to communicate according to a certain set of protocols. The apparatus **200** further comprises a processor **230**, operatively connected to these interfaces **241**, **211**, and more in particular to the aforementioned buffers **215**, **245**, the actions of which correspond to those described in connection with Figure 1. It shall be understood that the interconnection between the processor **230** and the data buffer **245** and the "ACK" buffer **215**, is precisely what allows the processor the carry out the process as described.

Although the apparatus **200** is illustrated in Figure 2 as a BTS, it may in fact be implemented as a part of a BTS or a mobile node, or as a stand-alone functional network node. In case the apparatus **200** is integrated in a larger network node, it will be clear that the interfaces **241**, **211** may be replaced by internal interfaces, which may include a physical backplane interface, a wire interface, a set of on-board microstrips, or even a logical interface implemented in software.

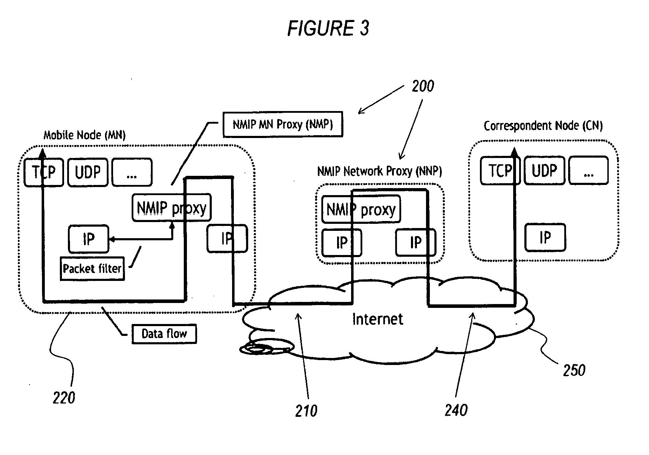

It should also be noted that the processor **230** may be implemented as a micro-processor, or alternatively as one or more dedicated and/or programmable or configurable hardware components, including ASIC, FPGA, and similar technologies. The network depicted in Figure 3 is a variation of that depicted in Figure 2. The mobile node **220** is connected to a BTS (not separately illustrated) via a slow link **210**. Without loss of generality, a wireless link **210** is assumed. Unlike the network of Figure 2, the network of Figure 3 is configured to host logic representing an embodiment of the method according to the present invention at two distinct places: inside the NMIP Mobile Node Proxy (NMP) **200a** implemented in association with the mobile node **220**, and inside the NMIP Network Proxy (NNP) **200b** implemented in association with the BTS.

All references to NMIP are to be understood in accordance with the definitions provided in US-A-2010135301, published on 3 June 2010.

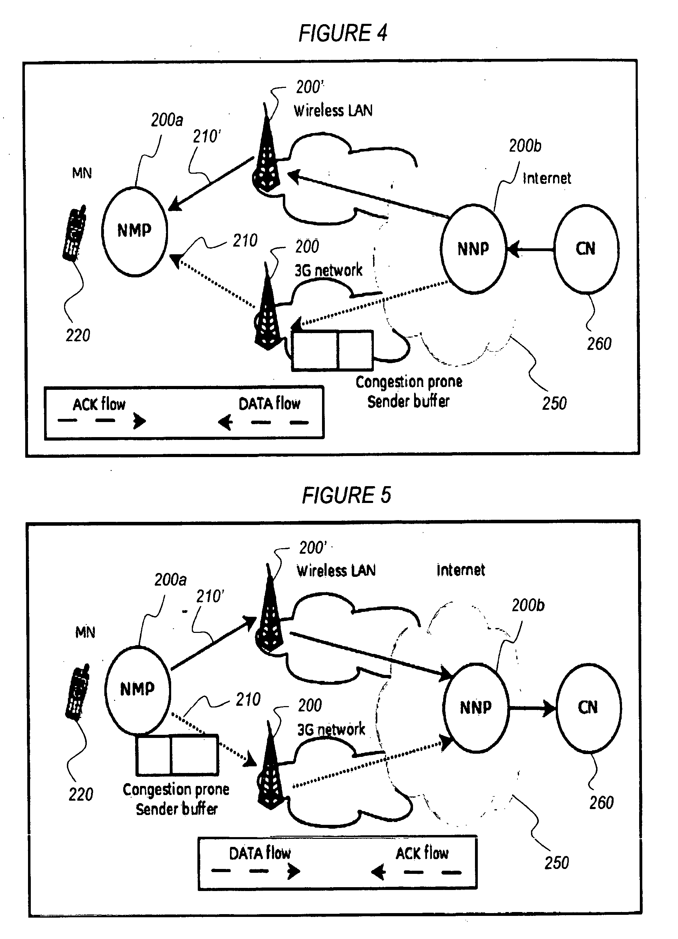

Figures 4 and 5 illustrate uses of the invention in the context of the network depicted in Figure 3. For the sake of illustration, and without loss of generality, the 3G wireless connection **210** between the mobile node (MN) **220** and the 3G BTS **200** is assumed to be the problematic link. Again without loss of generality, an alternative wireless local area network (WLAN) connection **210'** is assumed to be available, passing through WLAN Access Point (AP) **200'**.

Figure 4 focuses on the case where the mobile node (MN) **220** is receiving data originating from the corresponding node (CN) **260** via the BTS **200** (downlink).

A handover between 3G and WLAN is set to occur. Without the invention, the traffic is buffered at the 3G wireless link **210**; in this case PPP is used to encapsulate traffic over the serial line towards the mobile phone **220**, at which point datagrams travel over the bottleneck wireless link **210**.

The buffer associated with the 3G wireless link **210** is very large, typically more than 80KB. Hence, as the NMIP handover is completed, more recently generated packets are delivered on the WLAN link **210'**, concurrently with older packets still in the 3G interface's buffer. The TCP stack of the receiver **220** will designate this situation as an anomaly and reset the connection.

The invention is used to control the amount of data in flight over the edge bottleneck **210** in order to limit the impact of buffering, and in particular to avoid undesirable consequences such as connection resets.

When using the invention, the NNP **200b** modifies the TCP window field of the TCP acknowledgements (ACKs) sent back from the MN **220** to the CN **260** to transparently enforce flow control on the problematic slower link **210**. As the TCP window value set by the receiver **220** is usually large (typically 2^16 or more, as its buffer is rapidly flushed to the application), it can be reduced to reflect the amount of buffering that can be tolerated based on specified maximum desired latency. This operation is performed transparently: neither the MN **220** nor the CN **260** are aware of the datagram rewriting performed by the NNP **200b** in the middle of the connection.

Figures 5 focuses on the case where the mobile node (MN) **220** is sending data intended for the corresponding node (CN) **260** towards the BTS **200** (uplink).

Considering an analogous situation as the one described in the context of Figure 4, we will assume that a handover between 3G and WLAN is set to occur. Without the invention, the traffic is buffered at the 3G wireless link **210**; in this case the congestion prone sender buffer is situated at the MN **200**, whence datagrams travel over the bottleneck wireless link **210**.

The invention is used to control the amount of data in flight over the edge bottleneck **210** in order to limit the impact of buffering.

When using the invention, the NMP **200a** modifies the TCP window field of the TCP acknowledgements (ACKs) sent back from the CN **260** to the MN **220** to transparently enforce flow control on the problematic slower link **210**. As the TCP window value set by the receiver **260** is usually large (typically 2^16 or more, as its buffer is rapidly flushed to the application), it can be reduced to reflect the amount of buffering that can be tolerated based on specified maximum desired latency. This operation is performed transparently: neither the MN **220** nor the CN **260** are aware of the datagram rewriting performed by the NMP **200a** in the middle of the connection.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods.

The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for mitigating buffering delay in a Transmission Control Protocol, TCP, encapsulated data stream transmitted over a network, the method comprising conducting the following steps at a node in said network:
- receiving a first packet through a first interface, said first packet comprising data of said TCP-encapsulated data stream;
- receiving a second packet through a second interface, said second packet comprising an acknowledgement of segments of said TCP-encapsulated data stream;
- updating (130) a TCP Window field in said second packet in function of a state of buffer occupancy, and
- transmitting said updated second packet through said first interface,
**characterized in that** said method further comprises:
- analyzing said first packet and said second packet to estimate (110) an amount of outstanding data, wherein said analyzing comprises comparing a TCP sequence, SEQ, field of said first packet to a TCP acknowledgement, ACK, field of said second packet; and
- using said amount of outstanding data to determine (120) said state of buffer occupancy.

2. The method of claim 1, wherein said determining (120) of said state of buffer occupancy comprises comparing said amount of outstanding data to a predetermined threshold amount.

3. The method of any of the preceding claims, wherein one of said first interface and said second interface comprises a cellular interface.

4. The method of claim 3, wherein one of said first interface and said second interface comprises a 3G wireless interface.

5. The method of claim 3, wherein one of said first interface and said second interface comprises a femtocell interface.

6. The method of any of claims 1-2, wherein one of said first interface and said second interface comprises a WLAN interface.

7. A computer program configured to cause a processor to perform the method of any of the preceding claims.

8. An apparatus (200) for mitigating buffering delay in a Transmission Control Protocol, TCP, encapsulated data stream transmitted over a network, the apparatus comprising:
- a first interface (241) adapted to receive a first packet comprising data of said TCP-encapsulated data stream;
- a second interface (211) adapted to receive a second packet comprising an acknowledgement of a segments of said TCP-encapsulated data stream;
- a processor (230) operatively connected to said first interface and said second interface, said processor being configured to analyze said first packet and said second packet to estimate an amount of outstanding data, to use said amount of outstanding data to determine a state of buffer (245) occupancy, and to update a TCP Window field in said second packet in function of said state of buffer (245) occupancy, and to transmit said updated second packet through said first interface (241), wherein said estimating comprises comparing a TCP sequence, SEQ, field of said first packet to a TCP acknowledgement, ACK, field of said second packet.

9. The apparatus (200) of claim 8, wherein one of said first interface (241) and said second interface (211) comprises a cellular interface.

10. The apparatus of claim 9, wherein one of said first interface (241) and said second interface (211) comprises a 3G wireless interface.

11. The apparatus of claim 9, wherein one of said first interface (241) and said second interface (211) comprises a femtocell interface.

12. The apparatus of claim 8, wherein one of said first interface (241) and said second interface (211) comprises a WLAN interface.

13. A mobile node comprising the apparatus (200) of any of claims 8-12.

14. A wireless BTS comprising the apparatus (200) of any of claims 8-12.

## Patentansprüche

1. Verfahren zur Verringerung der Zwischenspeicherungsverzögerung in einem über ein Netzwerk übertragenen eingekapselten Übertragungssteuerungsprotokoll- bzw. TCP-Datenstrom, wobei das Verfahren das Durchführen der folgenden Schritte an einem Knoten in dem besagten Netzwerk umfasst:
- Empfangen eines ersten Pakets über eine erste Schnittstelle, wobei das besagte erste Paket Daten des besagten eingekapselten TCP-Datenstroms enthält;
- Empfangen eines zweiten Pakets über eine zweite Schnittstelle, wobei das besagte zweite Paket eine Bestätigung von Segmenten des besagten eingekapselten TCP-Datenstroms enthält;
- Aktualisieren (130) eines TCP-Fenster-Feldes in dem besagten zweiten Paket in Abhängigkeit von einem Zustand der Zwischenspeicherbelegung, und
- Übertragen des besagten aktualisierten Pakets über die besagte erste Schnittstelle,
**dadurch gekennzeichnet, dass** das besagte Verfahren weiterhin umfasst:
- Analysieren des besagten ersten Pakets und des besagten zweiten Pakets, um eine Menge von ausstehenden Daten zu schätzen (110), wobei das besagte Analysieren das Vergleichen eines TCP-Sequenz- bzw. SEQ-Feldes des besagten ersten Pakets mit einem TCP-Bestätigungs- bzw. ACK-Feld des besagten zweiten Pakets umfasst; und
- Verwenden der besagten Menge von ausstehenden Daten, um die besagte Zwischenspeicherbelegung zu bestimmen (120).

2. Verfahren nach Anspruch 1, wobei das besagte Bestimmen (120) des besagten Zustands der Zwischenspeicherbelegung das Vergleichen der besagten Menge von ausstehenden Daten mit einem vorbestimmten Mengengrenzwert umfasst.

3. Verfahren nach einem beliebigen der vorstehenden Ansprüche, wobei entweder die besagte erste Schnittstelle oder die besagte zweite Schnittstelle eine zellulare Schnittstelle umfasst.

4. Verfahren nach Anspruch 3, wobei entweder die besagte erste Schnittstelle oder die besagte zweite Schnittstelle eine drahtlose 3G-Schnittstelle umfasst.

5. Verfahren nach Anspruch 3, wobei entweder die besagte erste Schnittstelle oder die besagte zweite Schnittstelle eine Femtozellen-Schnittstelle umfasst.

6. Verfahren nach einem beliebigen der Ansprüche 1 - 2, wobei entweder die besagte erste Schnittstelle oder die besagte zweite Schnittstelle eine WLAN-Schnittstelle umfasst.

7. Computerprogramm, dafür konfiguriert, zu bewirken, dass ein Prozessor das Verfahren gemäß einem beliebigen der vorstehenden Ansprüche durchführt.

8. Vorrichtung (200) zur Verringerung der Zwischenspeicherungsverzögerung in einem über ein Netzwerk übertragenen eingekapselten Übertragungssteuerungsprotokoll- bzw. TCP-Datenstrom, wobei die Vorrichtung umfasst:
- Eine erste Schnittstelle (241), ausgelegt für den Empfang eines ersten Pakets mit Daten des besagten eingekapselten TCP-Datenstroms;
- eine zweite Schnittstelle (211), ausgelegt für den Empfang eines zweiten Pakets mit einer Bestätigung von Segmenten des besagten eingekapselten TCP-Datenstroms;
- einen Prozessor (230), welcher betriebsfähig an die besagte erste Schnittstelle und die besagte zweite Schnittstelle angeschlossen ist, wobei der besagte Prozessor dafür konfiguriert ist, das besagte erste Paket und das besagte zweite Paket zu analysieren, um eine Menge von ausstehenden Daten zu schätzen, die besagte Menge von ausstehenden Daten zu verwenden, um einen Zustand der Belegung des Zwischenspeichers (245) zu bestimmen, und eine TCP-Fenster-Feld in dem besagten zweiten Paket in Abhängigkeit des besagten Zustands der Belegung des Zwischenspeichers (245) zu aktualisieren, und das besagte aktualisierte zweite Paket über die besagte erste Schnittstelle (241) zu übertragen, wobei das besagte Schätzen das Vergleichen eines TCP-Sequenz- bzw. SEQ-Felds des besagten ersten Pakets mit einem TCP-Bestätigungs- bzw. ACK-Feld des besagten zweiten Pakets umfasst.

9. Vorrichtung (200) nach Anspruch 8, wobei entweder die besagte erste Schnittstelle (241) oder die besagte zweite Schnittstelle (211) eine zellulare Schnittstelle umfasst.

10. Vorrichtung nach Anspruch 9, wobei entweder die besagte erste Schnittstelle (241) oder die besagte zweite Schnittstelle (211) eine drahtlose 3G-Schnittstelle umfasst.

11. Vorrichtung nach Anspruch 9, wobei entweder die besagte erste Schnittstelle (241) oder die besagte zweite Schnittstelle (211) eine Femtozellen-Schnittstelle umfasst.

12. Vorrichtung nach Anspruch 8, wobei entweder die besagte erste Schnittstelle (241) oder die besagte zweite Schnittstelle (211) eine WLAN-Schnittstelle umfasst.

13. Mobiler Knoten, umfassend die Vorrichtung (200) gemäß einem beliebigen der Ansprüche 8 - 12.

14. Drahtlose BTS, umfassend die Vorrichtung (200) gemäß einem beliebigen der Ansprüche 8 - 12.

## Revendications

1. Procédé pour réduire le délai de mise en tampon dans un flux de données encapsulées en protocole de contrôle de transmission, TCP, transmis sur un réseau, le procédé comprenant l'exécution des étapes suivantes au niveau d'un noeud dans ledit réseau :
- recevoir un premier paquet par l'intermédiaire d'une première interface, ledit premier paquet comprenant des données dudit flux de données encapsulées en TCP ;
- recevoir un deuxième paquet par l'intermédiaire d'une deuxième interface, ledit deuxième paquet contenant un accusé de réception des segments dudit flux de données encapsulées en TCP ;
- mettre à jour (130) un champ de fenêtre TCP dans ledit deuxième paquet en fonction d'un état d'occupation du tampon, et
- transmettre ledit deuxième paquet mis à jour par l'intermédiaire de ladite première interface,
**caractérisé en ce que** ledit procédé comprend en outre les étapes suivantes :
- analyser ledit premier paquet et ledit deuxième paquet pour estimer (110) une quantité de données en attente, ladite analyse comprenant la comparaison d'un champ de séquence TCP, SEQ, dudit premier paquet à un champ d'accusé de réception TCP, ACK, dudit deuxième paquet ; et
- utiliser ladite quantité de données en attente pour déterminer (120) ledit état d'occupation du tampon.

2. Procédé selon la revendication 1, dans lequel ladite détermination (120) dudit état d'occupation du tampon comprend la comparaison de ladite quantité de données en attente à une quantité de seuil prédéterminée.

3. Procédé selon l'une quelconque des revendications précédentes, dans lequel une parmi lesdites première interface et deuxième interface comprend une interface cellulaire.

4. Procédé selon la revendication 3, dans lequel une parmi lesdites première interface et deuxième interface comprend une interface sans fil 3G.

5. Procédé selon la revendication 3, dans lequel une parmi lesdites première interface et deuxième interface comprend une interface femtocellulaire.

6. Procédé selon l'une quelconque des revendications 1 à 2, dans lequel une parmi lesdites première interface et deuxième interface comprend une interface WLAN.

7. Programme informatique configuré pour entraîner l'exécution du procédé par le processeur selon l'une quelconque des revendications précédentes.

8. Appareil (200) pour réduire le délai de mise en tampon dans un flux de données encapsulées en protocole de contrôle de transmission, TCP, transmis sur un réseau, l'appareil comprenant :
- une première interface (241) adaptée pour recevoir un premier paquet comprenant des données dudit flux de données encapsulées en TCP ;
- une deuxième interface (211) adaptée pour recevoir un deuxième paquet comprenant un accusé de réception des segments dudit flux de données encapsulées en TCP;
- un processeur (230) connecté de manière opérationnelle à ladite première interface et à ladite deuxième interface, ledit processeur étant configuré pour analyser ledit premier paquet et ledit deuxième paquet afin d'estimer une quantité de données en attente, pour utiliser ladite quantité de données en attente afin de déterminer un état d'occupation du tampon (245), et pour mettre à jour un champ de fenêtre TCP dans ledit deuxième paquet en fonction dudit état d'occupation du tampon (245), et pour transmettre ledit deuxième paquet mis à jour par l'intermédiaire de ladite première interface (241), dans lequel ladite estimation comprend la comparaison d'un champ de séquence TCP, SEQ, dudit premier paquet à un champ d'accusé de réception TCP, ACK, dudit deuxième paquet.

9. Appareil (200) selon la revendication 8, dans lequel une parmi lesdites première interface (241) et deuxième interface (211) comprend une interface cellulaire.

10. Appareil selon la revendication 9, dans lequel une parmi lesdites première interface (241) et deuxième interface (211) comprend une interface sans fil 3G.

11. Appareil selon la revendication 9, dans lequel une parmi lesdites première interface (241) et deuxième interface (211) comprend une interface femtocellulaire.

12. Appareil selon la revendication 8, dans lequel une parmi lesdites première interface (241) et deuxième interface (211) comprend une interface WLAN.

13. Noeud mobile comprenant l'appareil (200) selon l'une quelconque des revendications 8 à 12.

14. BTS sans fil comprenant l'appareil (200) selon l'une quelconque des revendications 8 à 12.
